# FASCICULE DE BREVET EUROPEEN

(11) **EP 2 110 277 B1**
(45) Date de publication et mention de la délivrance du brevet: **19.11.2014**
(21) Numéro de dépôt: 09350003.1
(22) Date de dépôt: 07.04.2009
(51) Int. Cl.: B60J 5/06, B60N 2/01, B62D 31/00

(54) **Véhicule automobile à quatre roues comportant trois sièges et des portes latérales coulissantes**
Kraftfahrzeug mit vier Rädern, drei Sitze und seitliche Schiebetüre
Four-wheeled automobile with three seats and lateral sliding doors

(30) Priorité: 14.04.2008 FR 0852482
(43) Date de publication de la demande: 21.10.2009
(73) Titulaire: Mia Electric, 79143 Cerizay (FR)
(72) Inventeur: Quéveau, Gérard, 79140 Le pin (FR); Guillez, Jean Marc, 79140 Cirières (FR)
(74) Mandataire: Tournel, Jean Louis

(56) Documents cités:
- EP-A- 1 403 111
- WO-A-92/18347
- WO-A-03/078192
- WO-A-2006/101537
- DE-U1- 29 610 524
- JP-A- 58 199 217
- JP-A- 63 013 817

## Description

La présente invention concerne un véhicule automobile à quatre roues, notamment destiné aux déplacements urbains.

On connaît un tel véhicule qui est relativement compact et du type comprenant une carrosserie comportant un plancher, un toit, et, de chaque côté, une aile latérale arrière fixe et une porte latérale avant mobile entre une position ouverte dans laquelle elle découvre une section de passage, et une position fermée. Cependant cette compacité est soit insuffisante, soit confère au véhicule un coût élevé, ce qui limite ses ventes.

Le document WO 03/078192 A montre un véhicule automobile à quatre roues conforme au préambule de la revendication 1.

La présente invention vise à réaliser un nouveau véhicule automobile à quatre roues destiné aux déplacements urbains.

Selon l'invention, dans le véhicule du type précité, la carrosserie délimite un habitacle dans lequel sont disposés un siège avant central et deux sièges arrière latéraux, et le toit comporte, de chaque côté, une échancrure horizontale qui est située dans le prolongement de la section de passage, et qui forme avec celle-ci une ouverture d'accès latérale aux sièges avant et arrière dégagée quand la porte correspondante est dans sa position ouverte, et obstruée quand la porte est dans sa position fermée.

Ainsi, la présence de trois sièges et leur disposition relative (un siège central avant, et deux siège arrière situés derrière et de chaque côté du siège avant) associée à un toit comportant, de chaque côté, une échancrure au niveau de la section de passage, permet de diminuer le volume de l'habitacle tout en facilitant l'accès aux sièges.

D'autres particularités et avantages de la présente invention apparaîtront dans la description détaillée d'un mode de réalisation donné à titre d'exemple non limitatif et illustré par les dessins mis en annexe dans lesquels :
La figure 1 est une vue schématique en perspective de dessus et de côté d'un véhicule conforme au mode de réalisation, le véhicule étant limité au plancher, aux roues, et aux sièges ;
La figure 2 est une vue en perspective de dessus et de côté du véhicule conforme au mode de réalisation, les portes étant fermées ;
La figure 3 est une vue en perspective de trois quart avant illustrant l'introduction des passagers ;
La figure 4 est une vue similaire aux figures 2 et 3 illustrant la facilité d'accès aux sièges arrière ;
La figure 5 est une vue similaire aux figures 2 à 4 illustrant la facilité d'accès au siège avant ;
La figure 6 est une vue similaire à la figure 4, les sièges arrière étant repliés ;
La figure 7 est une vue en coupe longitudinale du véhicule illustré aux figures 1 à 6 ;
La figure 8 est une vue similaire à la figure 7 d'un véhicule raccourci par rapport au véhicule illustré aux figures 1 à 7 ;
La figure 9 est une vue similaire à la figure 1 illustrant l'emplacement des batteries ;
La figure 10 est une vue en perspective de côté et de dessus de l'ossature tubulaire du véhicule illustré aux figures 1 à 7 et 9 ;
La figure 11 est une vue similaire à la figure 1, l'ossature étant représentée ; et
La figure 12 est une vue en perspective de dessus illustrant l'agencement relatif de l'ossature et des batteries
La figure 13 est une vue en coupe d'un exemple de porte du véhicule ;
La figure 14 est une vue en perspective de la porte de la figure 13 vue de l'intérieur ;
La figure 15 est une vue en perspective du véhicule montrant la porte à l'état fermée.
La figure 16 est une vue de dessus du véhicule porte fermée.

La présente invention concerne un véhicule automobile 1 à quatre roues 2, 3 comprenant une carrosserie qui délimite un habitacle dans lequel sont disposés un siège avant central 4 et deux sièges arrière latéraux 5. La carrosserie comporte un plancher 6, un toit 7, et, de chaque côté, une aile latérale arrière 8 et une porte latérale 9. En outre, la carrosserie comprend également une coque avant 10 qui est munie d'un pare-brise 11 et de deux ailes latérales avant 12.

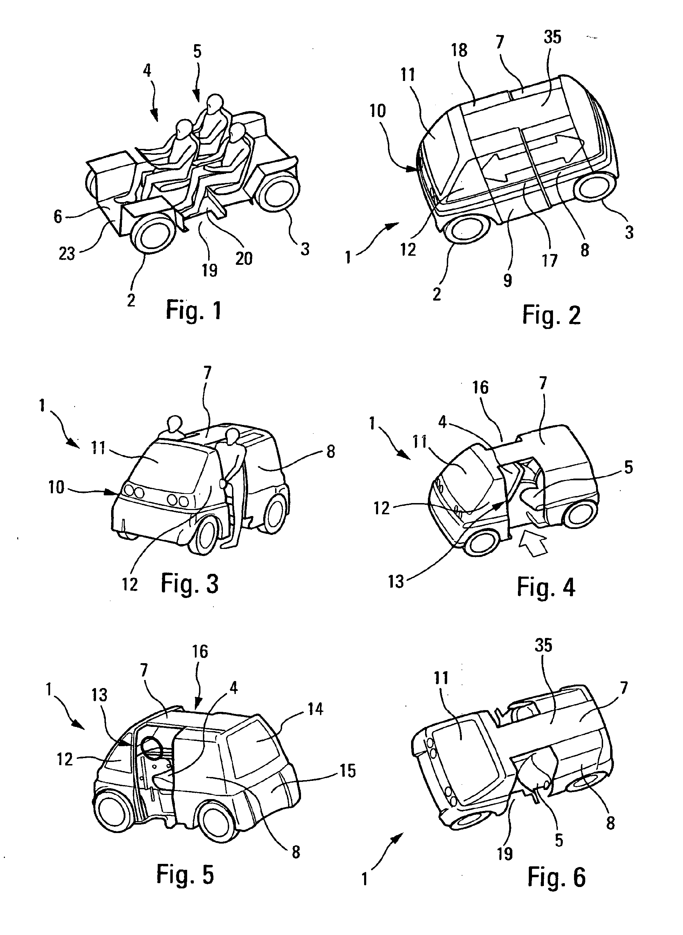

Chaque porte latérale 9 est mobile entre une position ouverte dans laquelle elle découvre une section de passage permettant un accès aux sièges avant 4 et arrière 5, et une position fermée dans laquelle elle obstrue cette section de passage. Dans le présent mode de réalisation, chaque porte 9 est montée coulissante selon la direction longitudinale du véhicule (cf. figure 2), éventuellement sans mouvement de dégagement transversal c'est-à-dire sans nécessité de procéder à une manoeuvre de déplacement perpendiculaire au plan de l'ouverture avant de la déplacer suivant l'axe longitudinal du véhicule. En position ouverte, chaque porte coulissante 9 recouvre l'aile latérale arrière 8 correspondante, et en position fermée, le bord avant de la porte 9 affleure le bord de la carrosserie délimitant l'avant 13 de la section de passage correspondante, et, plus précisément, vient écraser un joint d'étanchéité porté par l'aile latérale avant 12 correspondante.

Par ailleurs, la carrosserie comprend également, dans le présent mode de réalisation, un système d'accès au coffre arrière situé derrière les deux sièges arrière 5. En l'occurrence, ce système comprend, d'une part, un hayon 14 monté pivotant autour d'un axe transversal situé au niveau du toit 7, et, d'autre part, un portillon 15 monté pivotant autour d'un axe transversal situé au niveau du plancher 6. Le portillon 15 et le hayon 14 se rejoignent quand ils sont en position fermée.

En outre, comme on peut le voir aux figures 3 à 6, le toit 7 comporte, de chaque côté, une échancrure horizontale 16 qui est située dans le prolongement de la section de passage. Cette échancrure 16 forme, avec cette section de passage, une ouverture d'accès latéral aux sièges avant 4 et arrière 5. La présence de cette échancrure 16 aide grandement les passagers en leur permettant d'avoir un accès facile à leur siège sans effectuer des mouvements plus ou moins délicats. Chaque ouverture d'accès latéral est dégagée quand la porte 9 correspondante est dans sa position ouverte, et obstruée quand elle est dans sa position fermée. Dans le présent mode de réalisation, comme on peut le voir à la figure 2, chaque porte comprend, outre un panneau principal 17 essentiellement vertical qui est adapté à obstruer la section de passage, une plaque supérieure horizontale 18 qui est adaptée à obstruer l'échancrure de toit 16. La porte 9 est monobloc, ce qui signifie que la plaque supérieure 18 est fixe par rapport au panneau principal 17.

Toujours dans le but de faciliter l'accès aux sièges 4, 5, dans le présent mode de réalisation, le plancher 6 comporte, de chaque côté, une échancrure horizontale 19 qui est située dans le prolongement de la section de passage (cf. figures 3 à 6 et 12) laquelle découvre le sol ou le plan d'appui des roues du véhicules. Ainsi, chaque ouverture d'accès latéral est formée par une section de passage, une échancrure de toit 16 et une échancrure de plancher 19.Les deux échancrures sont sensiblement alignées selon un axe vertical. Grace à la disposition relative des échancrures et des sièges, une personne peut s'insérer dans ces échancrures, les pieds au sol pour ensuite s'installer aisément sur l'un des sièges avant ou arrière. La carrosserie comporte, de chaque côté, une plaque inférieure mobile entre position d'ouverture dans laquelle elle dégage l'échancrure de plancher 19, et une position de fermeture dans laquelle elle l'obstrue, la position de la plaque inférieure étant assujettie à celle de la porte 9 correspondante. Dans le présent mode de réalisation, afin d'éviter toute interférence avec les roues arrière 3 quand la porte 9 est dans sa position ouverte, la plaque inférieure ne fait pas partie de cette dernière, mais est montée au plancher 6.

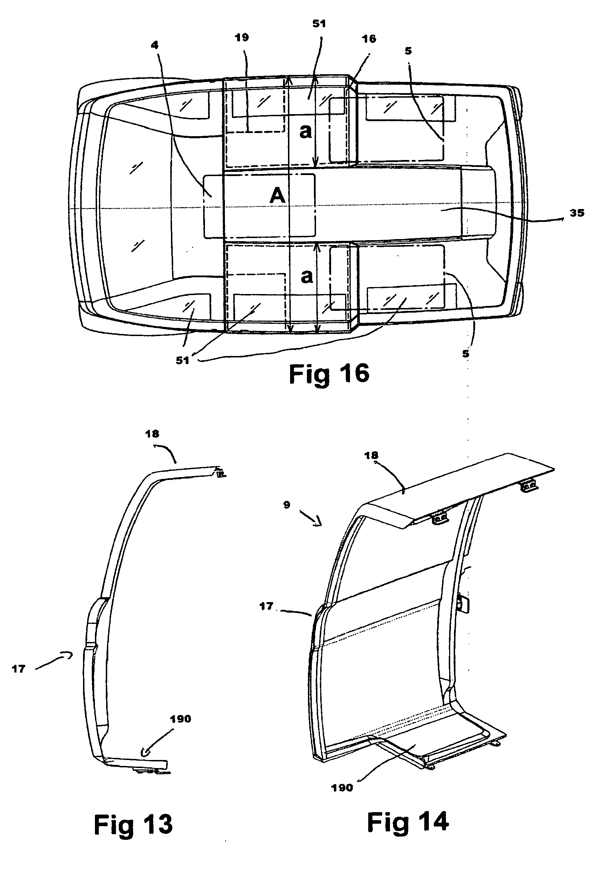

Dans une autre forme de réalisation figures 13,14 le panneau vertical porte à la fois la plaque supérieure 18 pour l'échancrure du toit et la plaque 190 pour l'échancrure du plancher.

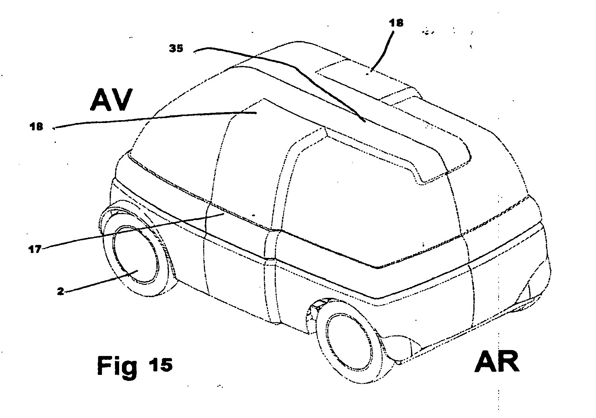

On notera que la plaque 190 inférieure est moins longue (moins étendue) que la plaque supérieure car le plancher empiète sur la section de passage pour recevoir les pieds du passager arrière (voir figure 4 à 6). Cela permet d'éviter une interférence avec la roue arrière. La figure 15 montre bien que la porte peut être manoeuvrée à l'ouverture sans nécessité de la déverrouiller par un mouvement perpendiculaire au plan de la dite porte. La figure 16 montre que la plaque supérieure 18 s'étend transversalement sur une distance (a) sensiblement égale à au moins le quart de la largeur totale A du véhicule et de préférence au tiers de cette largeur. La dimension transversale de cette échancrure est légèrement plus faible que celle du panneau. Cette figure 16 montre les sièges 4,5 en traits mixtes, les échancrures de toit 16 et de plancher 19 en pointillés et les rectangles sont des vitres 51.

De plus, afin de faciliter l'accès aux sièges 4, 5, ceux-ci ont une disposition particulière dans l'habitacle.

Ainsi, chaque siège arrière latéral 5 est disposé longitudinalement de sorte que la zone 20 du plancher 6 pour la réception des pieds du passager soit dans le prolongement de la section de passage correspondante, comme on peut le voir aux figures 1, 7 et 8. Ici, une partie de cette zone 20 est formée par la plaque inférieure. En outre, le bord avant 21 de chaque siège arrière latéral 5 est situé en avant du bord arrière 22 de la section de passage correspondante. Ici, la distance séparant longitudinalement le bord avant 21 du siège arrière latéral 5 du bord arrière 22 de la section de passage est au plus égale au tiers de la distance séparant les bords avant 13 et arrière 22 de la section de passage. De cette façon, l'accès à chaque siège arrière 5 est particulièrement simple, surtout quand le plancher 6 et le toit 7 comprennent une échancrure 16, 19 (cf. figure 4). Il est à noter que dans le présent exemple, chaque siège arrière 5 est pliable afin de permettre un accroissement du volume disponible pour le coffre arrière, si nécessaire (cf. figure 6).

De même le siège avant central 4 est disposé longitudinalement de sorte que son assise soit dans le prolongement des deux sections de passage. Dans cette configuration, la zone 23 du plancher 6 pour la réception des pieds du conducteur est située entre les roues avant 2. En outre, le bord avant 24 du siège avant central 4 est en avant du bord avant 13 des sections de passage, et son bord arrière 25 est en avant du bord arrière 22 des sections de passage. Ici, la distance longitudinalement le bord avant 24 du siège avant 4 du bord avant 13 de la section de passage est au plus égale au tiers de la distance séparant les bords avant 24 et arrière 25 de l'assise du siège avant 4. L'accès au siège 4 avant est facilité par le fait que c'est le seul siège avant et qu'il est disposé au centre (cf. figure 5). Son accessibilité peut être facilité s'il est monté coulissant et/ou pivotant.

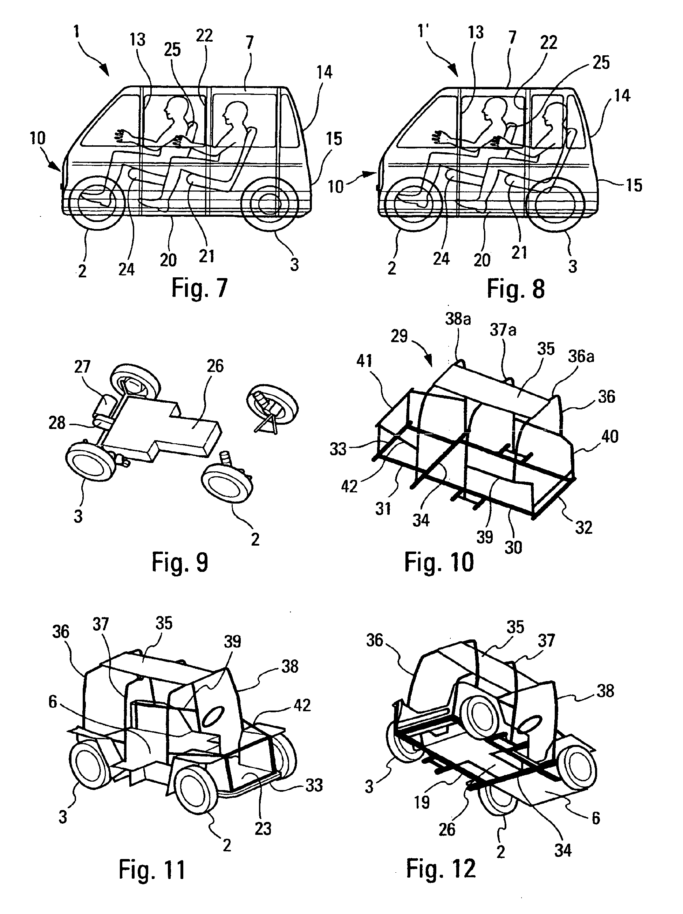

Dans le présent mode de réalisation, la motorisation du véhicule 1 est électrique, les batteries 26 étant disposés sous les trois sièges 4, 5, dans une configuration en forme de T (cf. figures 9 et 12). De plus, le moteur 27 et le différentiel 28 sont disposés derrière ces dernières, verticalement dans le prolongement de celles-ci, et longitudinalement au niveau des roues arrière 3. Cet agencement particulier permet un gain de place important dans l'habitacle.

En outre, le véhicule 1 comprend une ossature tubulaire 29 assurant sa rigidité et supportant la carrosserie.

L'ossature 29 comporte une structure inférieure qui est destinée à supporter le plancher 6 et qui est formée, d'une part par des barres 30, 31 qui s'étendent selon la direction longitudinale et forment la limite transversale de la structure inférieure, et, d'autre part, des barres, 32, 33 qui s'étendent selon la direction transversale. Ici, de chaque côté, il y a deux barres longitudinales 30, 31 comprennent :
une barre longitudinale arrière 30 s'étendant de l'extrémité arrière de la structure inférieure (et donc du véhicule) jusqu'à un point correspondant au bord avant 13 de la section de passage, et une barre longitudinale avant 31 qui s'étend de ce point jusqu'à l'extrémité avant de la structure inférieure
(et donc du véhicule). Les barres transversales 32, 33
comprennent une barre arrière 32 et une barre avant 33 qui forment les extrémités arrière et avant de la structure inférieure, ainsi qu'une barre intermédiaire 34 au niveau du point de jonction des tubes longitudinaux avant 31 et
arrière 30. L'absence de barre transversale entre le point correspondant au bord avant 13 de la section de passage et
l'extrémité arrière de la structure inférieure est due à la présence de la batterie 26 sous le plancher 6 (cf. figure 12).

L'ossature 29 comprend également une structure supérieure qui est destinée à supporter le toit 7 et qui comporte une plaque 35 sensiblement rectangulaire formant la partie centrale du toit 7. Cette plaque 35 s'étend longitudinalement du pare-brise 11 au hayon 14 et transversalement du bord intérieur d'une échancrure de toit 16 à l'autre (cf. figure 6).

En outre, l'ossature 29 comprend trois arceaux de liaison 36, 37, 38 reliant entre elles les deux structures inférieure et supérieure, chaque arceau 36, 37, 38 ayant une portion horizontale 36a, 37a, 38a qui est fixée à la plaque de la structure supérieure et dont les dimensions correspondent à la profondeur des échancrures du toit. De façon plus précise, il y a un arceau arrière 36 au niveau de l'extrémité arrière de la structure supérieure, un arceau intermédiaire 37 au niveau du bord arrière 22 des sections de passage, et un arceau avant 38 au niveau du bord avant 13 des sections de passage. Seuls les arceaux avant 38 et intermédiaire 37 s'étendent verticalement jusqu'à la structure inférieure, l'arceau arrière 36 s'étendant verticalement de chaque côté jusqu'à une barre longitudinale arrière de liaison 39 qui est située verticalement au niveau supérieur du logement des roues arrière 3. Chaque barre arrière de liaison 39 s'étend de l'arceau intermédiaire 37 à une barre verticale 40 reliée à la barre transversale arrière 32 de la structure inférieure.

Enfin, l'ossature 29 comprend un petit arceau 41 fixé à la barre transversale avant 33 de la structure inférieure et relié à l'arceau avant 38 par une barre longitudinale avant de liaison 42 qui est située verticalement au niveau supérieur du logement des roues avant 2.

De ce fait, cette ossature 29 permet de conférer toute la rigidité nécessaire à ce petit véhicule 1 qui est particulièrement adapté aux déplacements urbains.

Ce véhicule peut de préférence avoir une longueur d'environ 2,5 m, auquel cas la dimension du coffre arrière dans la direction longitudinale correspond au diamètre des roues arrière (le coffre a alors un volume de 550 l pouvant passer à 750 l ou 1 200 l selon qu'il y a un ou deux sièges arrière pliés ou enlevés) - cf. figure 7. Cette longueur peut être réduite à 2,10 m, auquel cas les dossiers des sièges arrière sont à proximité immédiate du hayon, le coffre arrière étant limité à l'espace sous les dossiers, du fait de leur inclinaison (le coffre a alors un volume de 120 l pouvant passer à 320 l ou 850 l selon qu'il y a un ou deux sièges arrière pliés ou enlevés) - cf. figure 8. Il serait évidement possible d'allonger le véhicule, par exemple jusqu'à 2,9 m, auquel cas le coffre a un volume de 1 000 litres pouvant passer à 1 200 litres ou 1 650 litres selon qu'il y a un ou deux sièges arrière pliés ou enlevés. L'allongement ou le raccourcissement du véhicule peuvent être réalisés de façon très simple en allongeant ou en raccourcissement les barres longitudinales arrière 30 et la plaque 35.

Bien évidemment la présente invention n'est pas limitée au présent mode de réalisation.

En outre le véhicule pourrait présenter l'un quelconque des aspects présentés ci-dessus, indépendamment les un des autres, tels que la présence d'échancrures au toit et/ou au plancher, la position des sièges arrière et/ou avant par rapport aux sections de passage, l'emplacement et/ou la forme de l'emplacement des batteries, et la présence et la forme de l'ossature.

## Revendications

1. Véhicule automobile (1) à quatre roues (2, 3) comprenant une carrosserie délimitant un habitacle et comportant un plancher (6), un toit (7), et, de chaque côté, une aile latérale arrière (8) fixe et une porte latérale (9) *coulissante* mobile entre une position ouverte dans laquelle elle découvre une section de passage, et une position fermée, le toit (7) comportant, de chaque côté, une échancrure sensiblement horizontale (16) située dans le prolongement de la section de passage et formant avec celle-ci une ouverture d'accès latérale, chaque ouverture d'accès latérale étant dégagée quand la porte (9) correspondante est dans sa position ouverte, et obstruée quand la porte (9) est dans sa position fermée, l'habitacle logeant un siège avant central (4) et deux sièges arrière latéraux (5) les dits sièges étant accessibles par chaque ouverture d'accès latérale, **caractérisé en ce que** chaque ouverture d'accès latérale est formée par la section de passage, par une échancrure horizontale (19) dans le plancher (6)et par une échancrure de toit (16) les dites échancrures étant alignées suivant un axe vertical.

2. Véhicule selon la revendication 1 **caractérisé en ce que** l'échancrure dans le plancher est moins longue que l'échancrure 16 dans le toit.

3. Véhicule selon la revendication 1 ou 2 **caractérisé en ce que** la dimension transversale des échancrures est d'au moins un quart de la largeur totale (A) du véhicule.

4. Véhicule automobile (1) selon la revendication 1 ou 2 ou 3, **caractérisé en ce que** la carrosserie comporte, de chaque côté, une plaque inférieure mobile entre une position d'ouverture dans laquelle elle dégage l'échancrure de plancher (19), et une position de fermeture dans laquelle elle l'obstrue, la position de la plaque inférieure étant assujettie à celle de la porte (9) correspondante.

5. Véhicule automobile selon la revendication 4, **caractérisé en ce que** la plaque inférieure adaptée à obstruer l'échancrure de plancher (19) est montée au plancher (6).

6. Véhicule automobile (1) selon l'une des revendications 1 à 5, **caractérisé en ce que** chaque porte (9) est montée coulissante selon la direction longitudinale, entre sa position ouverte dans laquelle elle recouvre l'aile latérale arrière (8) correspondante, et sa position fermée dans laquelle elle ferme la section de passage correspondante, *la dite porte coulissante* étant *sans mouvement* de *dégagement transversal.*

7. Véhicule automobile (1) selon l'une des revendications 1 à 6, **caractérisé en ce que** chaque porte (9) comprend un panneau principal (17) vertical adapté à obstruer la section de passage, une plaque supérieure horizontale (18)solidaire dudit panneau principal adaptée à obstruer l'échancrure de toit (16) et, éventuellement, une plaque inférieure (190) adaptée à obstruer l'échancrure (19) de plancher laquelle plaque inférieure est également solidaire dudit panneau principal.

8. Véhicule automobile (1) selon l'une des revendications 1 à 7, **caractérisé en ce que** chaque siège arrière latéral (5) est disposé longitudinalement de sorte que la zone (20) du plancher pour la réception des pieds du passager est dans le prolongement de la section de passage correspondante.

9. Véhicule automobile (1) selon l'une des revendications 1 à 8, **caractérisé en ce que** le bord avant (21) de chaque siège arrière latéral (5) est en avant du bord arrière (22) de la section de passage correspondante.

10. Véhicule automobile (1) selon la revendication 9, **caractérisé en ce que** la distance séparant longitudinalement le bord avant (21) de chaque siège arrière latéral (5) du bord arrière (22) de la section de passage correspondante est au plus égale au tiers de la distance séparant les bords avant (13) et arrière (22) de la section de passage.

11. Véhicule automobile (1) selon l'une des revendications 1 à 10, **caractérisé en ce que** le siège avant central (4) est disposé longitudinalement de sorte que son assise soit dans le prolongement des sections de passage, la zone (23) du plancher pour la réception des pieds du conducteur étant entre les roues avant (2).

12. Véhicule automobile (1) selon l'une des revendications 1 à 11, **caractérisé en ce que** le bord avant (24) du siège avant central (4) est en avant du bord avant (13) des sections de passage.

13. Véhicule automobile (1) selon la revendication 12, **caractérisé en ce que** la distance séparant longitudinalement le bord avant (24) du siège avant (4) du bord avant (13) de la section de passage est au plus égale au tiers de la distance séparant les bords avant (24) et arrière (25) de l'assise du siège avant (4).

14. Véhicule automobile (1) selon l'une des revendications 1 à 13, **caractérisé en ce que** le bord arrière (25) du siège avant central (4) est en avant du bord arrière (22) des sections de passage.

15. Véhicule automobile selon l'une des revendications 1 à 14, **caractérisé en ce qu'**il est à motorisation électrique, les batteries (26) étant disposés sous les trois sièges (4, 5), dans une configuration en forme de T.

16. Véhicule automobile selon l'une des revendications 1 à 15, **caractérisé en ce qu'**il comprend une ossature tubulaire (29) supportant la carrosserie et comprenant une structure inférieure (30, 31, 32, 33, 34), une structure supérieure (35) et des arceaux de liaison (36, 37, 38) reliant entre elles ces dernières.

## Patentansprüche

1. Vierrädriges (2,3) Kraftfahrzeug (1), das eine einen Fahrgastraum begrenzende Karosserie aufweist und einen Boden (6), ein Dach (7) und an jeder Seite eine festgelegte hintere Seitenfläche (8) und eine Seitentür (9) umfasst, die verschieblich zwischen einer Offenstellung beweglich ist, in der sie einen Durchgangsabschnitt aufmacht und einer Geschlossenstellung, wobei das Dach (7) auf jeder Seite eine deutliche horizontale Einbuchtung (16) aufweist, die in der Verlängerung des Durchgangsabschnitts angeordnet ist und mit diesem eine seitliche Einlassöffnung bildet, wobei jede seitliche Eintrittsöffnung frei ist, wenn die entsprechende Tür (9) in ihrer Offenstellung ist und verschlossen ist, wenn die Tür (9) in ihrer Geschlossenstellung ist, wobei der Fahrgastraum einem mittiger Vordersitz (4) und zwei seitlichen Rücksitzen (5) Platz bietet und diese Sitze durch jede seitliche Zugangsöffnung zugänglich sind, **dadurch gekennzeichnet, dass** jede seitliche Zugangsöffnung durch den Durchgangsabschnitt, durch eine horizontale Einbuchtung (19) im Boden (6) und durch eine Einbuchtung im Dach (16) gebildet wird, wobei die Einbuchtungen zu einer vertikalen Achse bündig sind.

2. Fahrzeug nach Anspruch 1, **dadurch gekennzeichnet, dass** jede Einbuchtung im Boden weniger lang als die Einbuchtung (16) im Dach ist.

3. Fahrzeug nach Anspruch 1 oder 2, **dadurch gekennzeichnet, dass** die Querausdehnung der Einbuchtungen wenigstens ein Viertel der Gesamtbreite (A) des Fahrzeugs ist.

4. Kraftfahrzeug (1) nach Anspruch 1, 2 oder 3, **dadurch gekennzeichnet, dass** die Karosserie auf jeder Seite eine untere Platte umfasst, die zwischen einer Öffnungsstellung, in der sie die Einbuchtung des Bodens (19) freigibt und einer Schließsstellung, in der sie sie verschließt, beweglich ist, wobei die Stellung der unteren Platte derjenigen der entsprechenden Tür (9) untergeordnet ist.

5. Kraftfahrzeug nach Anspruch 4, **dadurch gekennzeichnet, dass** die untere Platte, die zum Verschließen der Einbuchtung des Bodens (19) eingerichtet ist, am Boden (6) angebracht ist.

6. Kraftfahrzeug (1) nach einem der Ansprüche 1 bis 5, **dadurch gekennzeichnet, dass** jede Tür entlang der Längsrichtung zwischen ihrer Offenstellung verschieblich montiert ist, in der sie die entsprechende hintere Seitenfläche (8) verdeckt und ihrer Geschlossenstellung, in der sie den entsprechenden Durchgangsabschnitt verschließt, wobei die verschiebliche Tür keine transversale Öffnungsbewegung aufweist.

7. Kraftfahrzeug (1) nach einem der Ansprüche 1 bis 6, **dadurch gekennzeichnet, dass** jede Tür (9) eine vertikale Hauptwand (17) aufweist, die zum Verschließen des Durchgangsabschnitts eingerichtet ist, eine mit der Hauptwand verbundene horizontale obere Platte (18), die zum Verschließen der Ausbuchtung des Dachs (16) angepasst ist und schließlich eine untere Platte (190), die zum Verschließen der Ausbuchtung (19) des Bodens angepasst ist, wobei die untere Platte gleichermaßen mit der Hauptwand verbunden ist.

8. Kraftfahrzeug (1) nach einem der Ansprüche 1 bis 7, **dadurch gekennzeichnet, dass** jeder seitliche Rücksitz (5) in der Art in Längsrichtung angeordnet ist, dass der Bereich (20) des Bodens Aufnahme der Füße des Fahrgasts in der Verlängerung des entsprechenden Durchgangsabschnitts liegt.

9. Kraftfahrzeug (1) nach einem der Ansprüche 1 bis 8, **dadurch gekennzeichnet, dass** die Vorderkante (21) die jedes seitlichen Rücksitzes (5) vor der Hinterkante (22) des entsprechenden Durchgangsabschnitts liegt.

10. Kraftfahrzeug (1) nach Anspruch 9, **dadurch gekennzeichnet, dass** der Abstand, der die Vorderkante (21) jedes seitlichen Rücksitzes (5) von der Hinterkante (22) des entsprechenden Durchgangsabschnitts in Längsrichtung trennt, höchstens gleich einem Drittel des Abstands ist, der die Vorder- (13) und Hinterkante (22) des Durchgangsabschnitts trennt.

11. Kraftfahrzeug (1) nach einem der Ansprüche 1 bis 10, **dadurch gekennzeichnet, dass** der mittige Vordersitz (4) in Längsrichtung in der Art angeordnet ist, dass seine Basis in der Verlängerung der Durchgangsabschnitte ist und der Bereich (23) des Bodens zur Aufnahme der Füße des Fahrers zwischen den Vorderrädern (2) liegt.

12. Kraftfahrzeug (1) nach einem der Ansprüche 1 bis 11, **dadurch gekennzeichnet, dass** die Vorderkante (24) des mittigen Vordersitzes (4) vor der Vorderkante (13) der Durchgangsabschnitte liegt.

13. Kraftfahrzeug (1) nach Anspruch 12, **dadurch gekennzeichnet, dass** der Abstand, der in Längsrichtung die Vorderkante (24) des Vordersitzes (4) von der Vorderkante (13) des Durchgangsabschnitts trennt, höchstens gleich einem Drittel des Abstands ist, der die Vorder- (24) und Hinterkanten (25) der Basis des Vordersitzes (4) trennt.

14. Kraftfahrzeug (1) nach einem Ansprüche 1 bis 13, **dadurch gekennzeichnet, dass** die Hinterkante (25) des mittigen Vordersitzes (4) vor der Hinterkante (22) des Durchgangsabschnitts liegt.

15. Kraftfahrzeug nach einem der Ansprüche 1 bis 14, **dadurch gekennzeichnet, dass** es eine elektrische Motorisierung aufweist, wobei die Batterien (26) in einer Anordnung in T-Form unter den drei Sitzen (4, 5) angeordnet sind.

16. Kraftfahrzeug nach einem der Ansprüche 1 bis 15, **dadurch gekennzeichnet, dass** es einen Rohrrahmen (29) aufweist, der die Karosserie trägt und eine Unterstruktur (30, 31, 32, 33, 34), eine Überstruktur (35) und Verbindungsbögen (36, 37, 38), die die letzteren miteinander verbinden.

## Claims

1. Motor vehicle (1) with four wheels (2, 3), comprising a body delimiting a passenger compartment and comprising a floor (6), a roof (7) and, on each side, a fixed rear lateral wing (8) and a sliding side door (9) movable between an open position in which it leaves clear a passage section, and a closed position, the roof (7) comprising, on each side, a substantially horizontal cutout (16) situated in line with the passage section and forming therewith a lateral access opening, each lateral access opening being left clear when the corresponding door (9) is in its open position and obstructed when the door (9) is in its closed position, the passenger compartment housing a central front seat (4) and two lateral rear seats (5), said seats being accessible through each lateral access opening, **characterised in that** each lateral access opening is formed by the passage section, by a horizontal cutout (19) in the floor (6) and by a roof cutout (16), said cutouts being aligned on a vertical axis.

2. Vehicle according to claim 1, **characterised in that** the cutout in the floor is shorter than the cutout (16) in the roof.

3. Vehicle according to claim 1 or 2, **characterised in that** the transverse dimension of the cutouts is at least a quarter of the total width (A) of the vehicle.

4. Motor vehicle (1) according to claim 1 or 2 or 3, **characterised in that** the body has, on each side, a bottom plate movable between an open position in which it leaves clear the floor cutout (19) and a closed position in which it obstructs it, the position of the bottom plate being dependent on that of the corresponding door (9).

5. Motor vehicle according to claim 4, **characterised in that** the bottom plate adapted to obstruct the floor cutout (19) is mounted on the floor (6).

6. Motor vehicle (1) according to one of claims 1 to 5, **characterised in that** each door (9) is mounted so as to slide in the longitudinal direction, between its open position in which it covers the corresponding rear lateral wing (8) and its closed position in which it closes off the corresponding passage section, said sliding door being without any transverse clearance movement.

7. Motor vehicle (1) according to one of claims 1 to 6, **characterised in that** each door (9) comprises a vertical main panel (17) adapted to obstruct the passage section, a horizontal top plate (18) secured to said main panel adapted to obstruct the roof cutout (16) and, optionally, a bottom plate (190) adapted to obstruct the floor cutout (19), said bottom plate also being secured to said main panel.

8. Motor vehicle (1) according to one of claims 1 to 7, **characterised in that** each lateral rear seat (5) is disposed longitudinally so that the area (20) of the floor for receiving the feet of the passenger is in line with the corresponding passage section.

9. Motor vehicle (1) according to one of claims 1 to 8, **characterised in that** the front edge (21) of each lateral rear seat (5) is in front of the rear edge (22) of the corresponding passage section.

10. Motor vehicle (1) according to claim 9, **characterised in that** the distance longitudinally separating the front edge (21) of each lateral rear seat (5) from the rear edge (22) of the corresponding passage section is no more than one third of the distance separating the front (13) and rear (22) edges of the passage section.

11. Motor vehicle (1) according to one of claims 1 to 10, **characterised in that** the central front seat (4) is disposed longitudinally so that its squab is in line with the passage sections, the area (23) of the floor for receiving the feet of the driver being between the front wheels (2).

12. Motor vehicle (1) according to one of claims 1 to 11, **characterised in that** the front edge (24) of the central front seat (4) is in front of the front edge (13) of the passage sections.

13. Motor vehicle (1) according to claim 12, **characterised in that** the distance longitudinally separating the front edge (24) of the front seat (4) from the front edge (13) of the passage section is no more than one third of the distance separating the front (24) and rear (25) edges of the squab of the front seat (4).

14. Motor vehicle (1) according to one of claims 1 to 13, **characterised in that** the rear edge (25) of the central front seat (4) is in front of the rear edge (22) of the passage sections.

15. Motor vehicle according to one of claims 1 to 14, **characterised in that** it has an electric drive, the batteries (26) being disposed under the three seats (4, 5), in a T-shaped configuration.

16. Motor vehicle according to one of claims 1 to 15, **characterised in that** it comprises a tubular framework (29) supporting the body and comprising a bottom structure (30, 31, 32, 33, 34), a top structure (35) and connecting arches (36, 37, 38) connecting these together.
